# EUROPEAN PATENT SPECIFICATION

(11) **EP 4 628 974 B1**
(45) Date of publication and mention of the grant of the patent: **04.11.2026**
(21) Application number: 25166847.1
(22) Date of filing: 27.03.2025
(51) Int. Cl.: G02B 30/56

(54) **DISPLAY DEVICE**
ANZEIGEVORRICHTUNG
DISPOSITIF D'AFFICHAGE

(30) Priority: 05.04.2024 JP 2024061613
(43) Date of publication of application: 08.10.2025
(73) Proprietor: ALPS ALPINE CO., LTD., Ota-ku Tokyo 145-8501 (JP)
(72) Inventor: Yuza, Shingo, Iwaki-city Fukushima (JP); Uchiyama, Ryu, Iwaki-city Fukushima (JP)
(74) Representative: Schmitt-Nilson Schraud Waibel Wohlfrom Patentanwälte Partnerschaft mbB

(56) References cited:
- US-A1- 2018 284 470
- US-A1- 2019 179 062
- US-A1- 2023 341 703

## Description

The present invention relates to a display device having a function of displaying an aerial image using retroreflection.

Aerial imaging by retroreflection (AIRR) using retroreflection is known. For example, US 2018/284470 Al discloses prior art and JP 2018-81138 A discloses an image display device including a retroreflecting member which is arranged between a half mirror and an image output device and has a plurality of openings through which at least a part of light that is output from the image output device passes.

The present disclosure relates to a display device according to the appended claims. Embodiments are disclosed in the dependent claims.

A display device according to an aspect of the present invention is capable of displaying an aerial image by using retroreflection, and includes a light source, a diffusion plate arranged over the light source, a first polarizing plate arranged over the diffusion plate, a second polarizing plate arranged over the first polarizing plate, a retroreflecting member arranged on the second polarizing plate and having a design for generating an original image by irradiation of the light source, and a polarizing beam splitter arranged to face the retroreflecting member. The first polarizing plate includes a region inclined with respect to a main surface of the second polarizing plate.
FIG. 1 is a diagram explaining a method of dimming a light source using polarization in a conventional display device;
FIG. 2 is a diagram illustrating an outer appearance of the conventional display device;
FIG. 3A is a view illustrating a method of dimming a light source using polarization according to a conventional structure;
FIG. 3B is a schematic cross-sectional view illustrating a configuration of a display device according to a first example of the present invention;
FIG. 4A is a perspective view illustrating a specific example of a diffusion plate of FIG. 3B;
FIG. 4B is a plan view illustrating a specific example of the diffusion plate of FIG. 3B;
FIG. 5A is a perspective view illustrating a specific example of a support member of FIG. 3B;
FIG. 5B is a plan view illustrating a specific example of the support member of FIG. 3B;
FIG. 6A is a schematic cross-sectional view illustrating an overall configuration of the display device according to the first example of the present invention;
FIG. 6B is a perspective view illustrating the overall configuration of the display device according to the first example of the present invention;
FIG. 7 is a schematic cross-sectional view illustrating a configuration of a display device according to a second example of the present invention;
FIG. 8A is a perspective view illustrating a specific example of a diffusion plate of FIG. 7;
FIG. 8B is a plan view illustrating a specific example of the diffusion plate of FIG. 7;
FIG. 9A is a schematic cross-sectional view illustrating an overall configuration of the display device according to the second example of the present invention; and
FIG. 9B is a perspective view illustrating an overall configuration of the display device according to the second example of the present invention.

Some AIRR-type aerial image display systems use LEDs as light sources. In this case, the aerial image is a fixed icon, and the retroreflective sheet is processed to have a cutout. In order to make the product compact, a structure in which a polarizing beam splitter, a light source, and a retroreflective sheet, which are optical components, are arranged in parallel may be employed. In this case, a method using polarization is adopted in order to make it difficult for a viewer to visually recognize the light source.

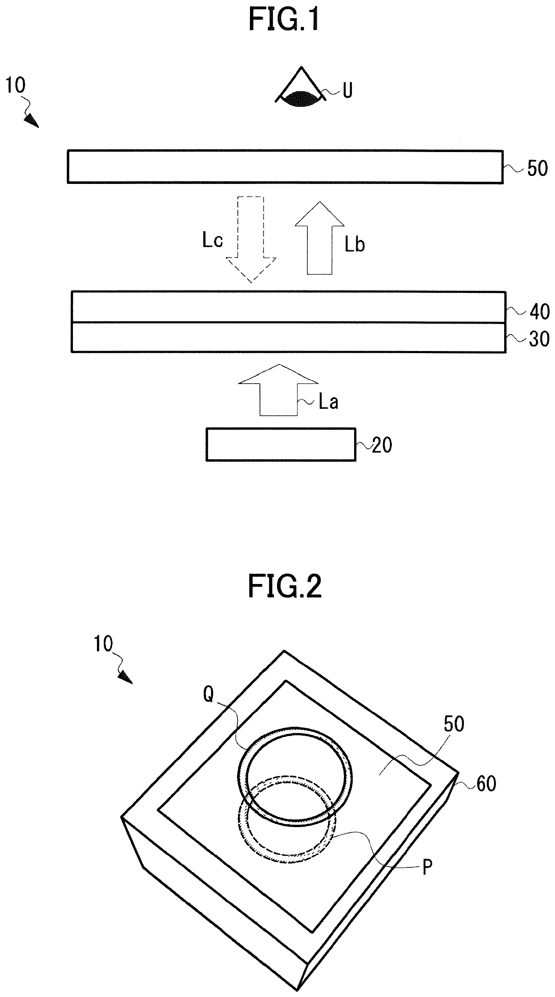

A method of dimming a light source using polarization will be described with reference to FIG. 1. The display device 10 includes a light source 20, a diffusion plate 30, a polarizer 40, and a polarizing beam splitter 50, which are arranged in parallel to each other. Non-polarized light La emitted from the light source 20 is incident on the polarizing plate 40 via the diffusion plate 30, and polarized light Lb is emitted from the polarizing plate 40. The transmission axis of the polarizing plate 40 is aligned with the reflection axis of the polarizing beam splitter 50, and the light Lb emitted from the polarizing plate 40 becomes light Lc reflected by the polarizing beam splitter 50. This makes it difficult for a viewer U to see the light from the light source 20.

FIG. 2 is a diagram illustrating an outer appearance of the conventional display device. The display device 10 includes a substantially rectangular housing 60, a polarizing beam splitter 50 is attached to the surface of the housing 60, and the light source 20, the diffusion plate 30, the polarizing plate 40, and a retroreflective sheet on the polarizing plate 40 are arranged inside the housing 60. A ring-shaped through-hole or cutout to be an original image P of the aerial image Q is formed in the retroreflective sheet, and a ring-shaped aerial image Q is displayed above the housing 60.

In the conventional display device, the light source (original image P) viewed through the polarizing beam splitter is made difficult to be visually recognized, using polarization. In reality, however, when the aerial image Q is viewed at a certain angle, there is a range in which the light source (original image P) is viewed brightly, and in this case, the light source (original image P) and the aerial image Q are viewed at the same time, and thus, a sense of discomfort is caused in the viewing of the aerial image Q.

A display device according to an aspect of the present invention is capable of displaying an aerial image by utilizing retroreflection, and includes a light source, a diffusion plate arranged over the light source, a first polarizing plate arranged over the diffusion plate, a second polarizing plate arranged over the first polarizing plate, a retroreflecting member arranged on the second polarizing plate and having a design for generating an original image by irradiation of the light source, and a polarizing beam splitter arranged to face the retroreflecting member. The first polarizing plate includes a region inclined with respect to a main surface of the second polarizing plate.

In one aspect, the first polarizing plate may include a first inclined region inclined downward with respect to the main surface of the second polarizing plate and a second inclined region opposite to the first inclined region and inclined upward. In one aspect, an inclination angle of the first inclined region with respect to the main surface of the second polarizing plate and an inclination angle of the second inclined region with respect to the main surface of the second polarizing plate are the same. In one aspect, directions of a transmission axis of the first polarizing plate and a transmission axis of the second polarizing plate may be aligned with a direction of a reflection axis of the polarizing beam splitter.

A display device according to a further aspect of the present invention is capable of displaying an aerial image by utilizing retroreflection, and includes a light source, a diffusion plate arranged over the light source, a first polarizing plate arranged on the diffusion plate, a second polarizing plate arranged over the first polarizing plate, a retroreflecting member arranged on the second polarizing plate and having a design for generating an original image by irradiation of the light source, and a polarizing beam splitter arranged to face the retroreflecting member. The first polarizing plate has a curved shape.

In one aspect, the curved shape of the first polarizing plate may conform to the design of the retroreflecting member. In one aspect, directions of a transmission axis of the first polarizing plate and a direction axis of the second polarizing plate may be aligned with a direction of a reflection axis of the polarizing beam splitter.

According to aspects of the present invention, the first polarizing plate has an inclined region or a curved shape, and thus light emitted from the light source can be effectively polarized as compared with the case where only the second polarizing plate is provided. This makes it difficult to see the original image formed on the retroreflecting member, and thus the visibility of the aerial image can be improved.

A display device according to aspects of the present invention displays an aerial image using retroreflection in a three-dimensional space that can be viewed without wearing special glasses or the like. The display device according to the present invention can provide a non-contact user interface with high interactivity with an aerial image. It should be noted that the drawings referred to in the following description of the examples include exaggerated representations for ease of understanding of the invention, and do not represent the actual shapes and scales of products as they are.

### [Examples]

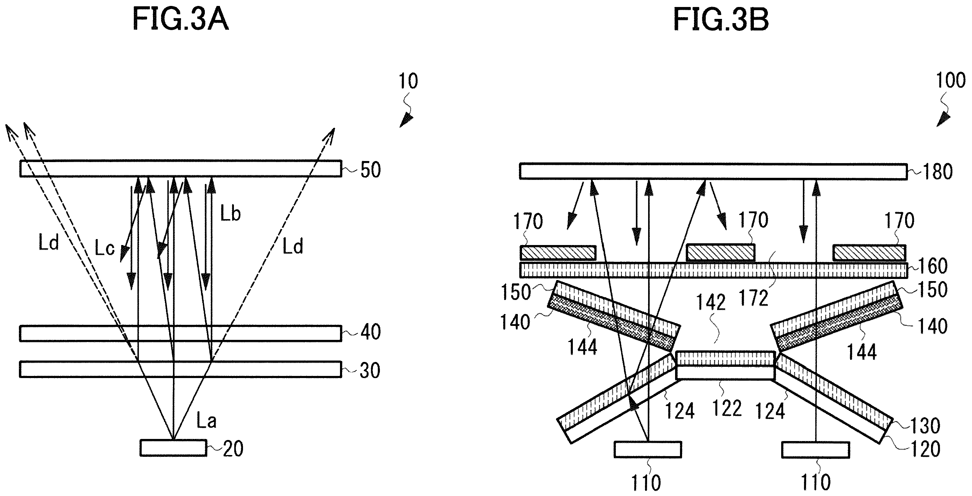

Next, examples of the present invention will be described in detail. FIG. 3A is a view illustrating a method of dimming a light source using polarization in the conventional structure, and FIG. 3B is a schematic cross-sectional view illustrating a configuration of a display device according to a first example of the present invention.

In the method of dimming a light source in the conventional display device 10, of the light La emitted from the light source 20, light incident substantially perpendicularly to the main surface of the polarizing plate 40 through the diffusion plate 30 is polarized in the direction of the transmission axis of the polarizing plate 40, and the polarized light Lb becomes light Lc reflected by the polarizing beam splitter 50. On the other hand, light obliquely incident on the main surface of the polarizing plate 40 through the diffusion plate 30 is not sufficiently polarized in the direction of the transmission axis by the polarizing plate 40, and the unpolarized light Ld is not reflected by the polarizing beam splitter 50 but is transmitted therethrough.

In general, in the case where light is incident on a polarizing plate from a perpendicular direction, the polarizing plate exhibits the maximum effect, but when light is incident on the polarizing plate from an oblique direction, the effect of the polarizing plate is reduced. In other words, the larger the incident angle of light is, the lesser the effect of the polarizing plate becomes.

The display device 100 of the present example includes, as illustrated in FIG. 3B, a light source 110, a diffusion plate 120, a polarizing plate 130, a support member 140, a polarizing plate 150, a polarizing plate 160, a retroreflecting plate 170, and a polarizing beam splitter 180.

The light source 110 is an LED light source but not limited thereto, and one or more light sources 110 are arranged. One LED light source includes one or more light emitting elements. The drawing illustrates two light sources 110 below the inclined regions 124 of the diffusion plate 120, each light source 110 emitting unpolarized light from the top at a predetermined emission angle.

The diffusion plate 120 is arranged over the light source 110. The diffusion plate 120 diffuses light from the light sources 110 in various directions to provide more uniform light to the polarizing plate 130. The diffusion plate 120 includes a flat region 122 substantially orthogonal to the optical axis of the light source 110 and regions 124 inclined from the flat region 122.

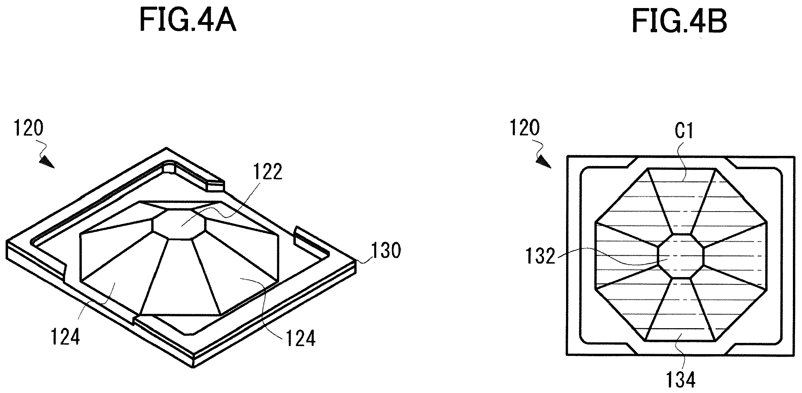

FIGS. 4A and 4B illustrate a specific example of the diffusion plate 120. FIG. 4A is a perspective view of the diffusion plate, and FIG. 4B is a plan view of the diffusion plate. The diffusion plate 120 has a substantially rectangular outer shape, and in the center portion of the diffusion plate 120, the flat region 122 having an octagonal shape and eight inclined regions 124 connected to the flat region 122 are formed. The inclination angle of the inclined regions 124 is not particularly limited, but for example, the inclined regions 124 are inclined at 30 to 45 degrees with respect to the main surface of the flat region 122. The shape of the flat region 122 may be a triangle, a quadrangle, a hexagon, or the like, instead of an octagon.

The polarizing plate 130 is arranged on the diffusion plate 120. The polarizing plate 130 is an optical element that converts light incident from the diffusion plate 120 into light polarized in a certain direction. Although the shape and size of the polarizing plate 130 are not particularly limited, the polarizing plate 130 is, for example, a polarizing film and is attached to the entire surface of the diffusion plate 120 or to the flat region 122 and the inclined regions 124. FIG. 4B illustrates an example in which a polarizing film is attached to the flat region 122 and the inclined regions 124. In this example, the polarizing plate 130 includes a flat region 132 and inclined regions 134. The dash-dotted line C1 in the drawing represents a transmission axis of the polarizing plate 130, namely a direction of polarization.

The support member 140 is arranged over the diffusion plate 120. The support member 140 is made of a material that transmits light, and the support member 140 includes an opening 142 facing the flat region 122 of the diffusion plate 120 and inclined regions 144 facing the inclined region 124 of the diffusion plate 120. The inclined regions 144 are inclined at, but not particularly limited to, the same angle as the inclined regions 124 to the opposite side of the inclined regions 124, for example. The polarizing plate 150 is arranged on the inclined regions 144 of the support member 140.

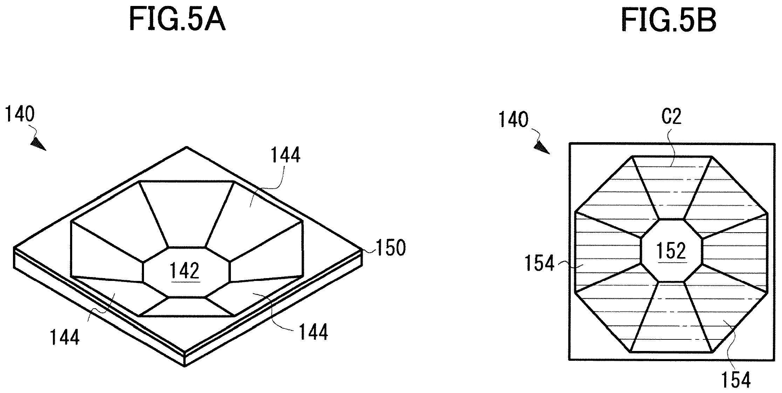

FIGS. 5A and 5B illustrate a specific example of the support member. FIG. 5A is a perspective view of the support member 140, and FIG. 5B is a plan view of the support member 140. The support member 140 has a substantially rectangular outer shape, and an octagonal opening 142 is formed in the center portion of the support member 140, and eight regions 144 inclined upward are formed so as to be connected to the opening 142. The opening 142 has a shape and a size corresponding to the flat region 122 of the diffusion plate 120, and the eight inclined regions 144 have a shape and a size respectively corresponding to the eight inclined regions 124 of the diffusion plate 120.

The polarizing plate 150 may be arranged on the entire surface of the support member 140 or on the inclined regions 144. Although the shape and size of the polarizing plate 150 are not particularly limited, the polarizing plate 150 is, for example, a polarizing film, and FIG. 5B illustrates an example in which the polarizing film is attached to the inclined regions 144. In this example, the polarizing plate 150 includes an octagonal opening 152 at the center and regions 154 inclined downward. The dash-dotted line C2 in the drawing represents a transmission axis of the polarizing plate 150, namely a direction of polarization, and the transmission axis C2 is in the same direction as the transmission axis C1 of the polarizing plate 130. In one aspect, the downward-inclined regions 154 of the polarizing plate 150 and the upward-inclined regions 134 of the polarizing plate 130 are arranged generally symmetrically with respect to the flat region 132 of the polarizing plate 130 or the flat region 122 of the diffusion plate 120.

The polarizing plate 160 is arranged over the support member 140 and the polarizing plate 150. The polarizing plate 160 has a substantially rectangular shape, and a main surface thereof is substantially orthogonal to the optical axis of the light sources 110. The transmission axis of the polarizing plate 160 is in the same direction as the transmission axis C1 of the polarizing plate 130 and the transmission axis C2 of the polarizing plate 150.

The retroreflecting plate 170 is arranged on the polarizing plate 160. The retroreflecting plate 170 is an optical member that reflects light in the same direction as incident light, and is configured by, for example, a prism type retroreflective element, such as a triangular pyramid type retroreflective element or a full cube corner type retroreflective element, or a bead type retroreflective element. A phase adjustment film such as a λ/4 film or a protective film is attached to the surface of the retroreflecting plate 170. The phase adjustment film adjusts the phase between the incident light and the reflected light of the retroreflecting plate 170, and allows the light reflected by the retroreflecting plate 170 to pass through the polarizing beam splitter 180.

A design that is an original image of the aerial image is formed on the retroreflecting plate 170. The design is formed by a through-hole or a cutout 172 formed in the retroreflecting plate 170. The retroreflecting plate 170 is irradiated on the rear surface side by light from the light sources 110, and a part of the light is transmitted through the through-hole 172, thereby generating a design to be an original image. The design is not particularly limited, and examples thereof include characters, figures, symbols, and icons.

The polarizing beam splitter 180 is arranged so as to face the polarizing plate 160 and the retroreflecting plate 170 substantially in parallel. The reflection axis of the polarizing beam splitter 180 is in the same direction as the transmission axis C1 of the polarizing plate 130, the transmission axis C2 of the polarizing plate 150, and the transmission axis of the polarizing plate 160, and thus the polarized light that has passed through the polarizing plates 130, 150, and 160 from the light sources 110 is reflected by the polarizing beam splitter 180. For the light reflected by the polarizing beam splitter 180, incident on the retroreflecting plate 170, and reflected by the retroreflecting plate 170, on the other hand, the direction of polarization of this reflected light is adjusted by passing through the phase adjustment film. In other words, the direction of polarization of the light retroreflected by the retroreflecting plate 170 does not coincide with the reflection axis of the polarizing beam splitter 180, and the light passes through the polarizing beam splitter 180 and forms an aerial image. The aerial image is displayed at a position symmetrical to the light source (herein, the position at which the original image is generated) with respect to the main surface of the polarizing beam splitter 180.

Next, the operation of the display device according to the present example will be described. The unpolarized light radially emitted from the light sources 110 is incident on the diffusion plate 120 having an octagonal structure as illustrated in FIG. 4A. The incident light is diffused in various directions by the diffusion plate 120, and the diffused light is incident on the polarizing plate 130. The polarizing plate 130 effectively polarizes light incident in a substantially perpendicular direction, but does not sufficiently polarize light incident from an oblique direction or hardly polarizes the light. In other words, the oscillation of light in directions other than the transmission axis of the polarizing plate 130 is not sufficiently attenuated. The light transmitted through the polarizing plate 130 is incident on the polarizing plate 150 again, and even if the light is not sufficiently polarized by the polarizing plate 130, the light incident on the polarizing plate 150 in a substantially perpendicular direction is polarized by the polarizing plate 150.

In this way, by interposing the two polarizing plates 130 and 150 having different inclination angles in addition to the polarizing plate 160, the ratio of light incident on the polarizing plates from the perpendicular direction increases, and most of the light emitted from the light source 110 is polarized. As a result, the ratio of the light Ld, which is obliquely incident on the polarizing plate 40 and not polarized as illustrated in FIG. 3A, can be reduced. As a result, the original image can be made less visible through the polarizing beam splitter, and the visibility of the aerial image can be increased.

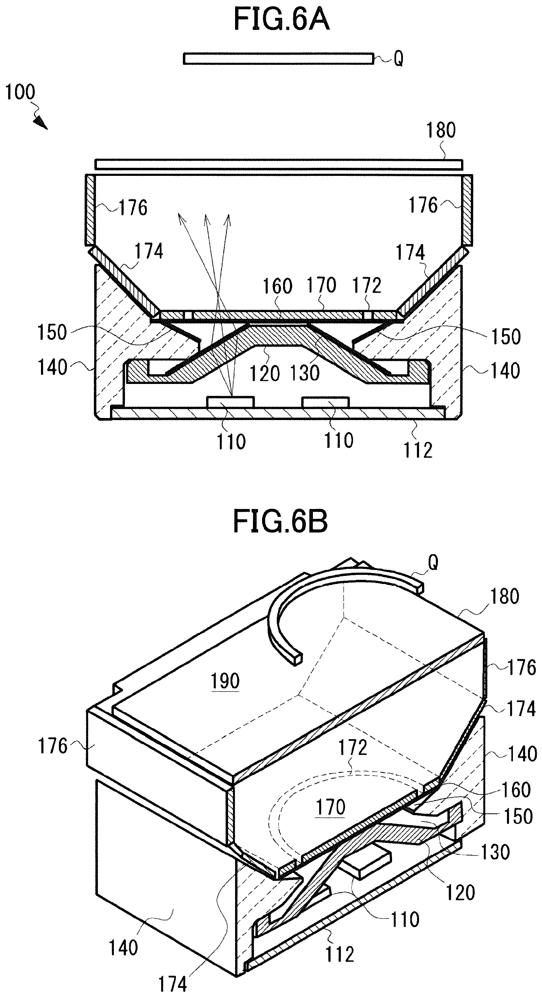

FIGS. 6A and 6B are diagrams illustrating the overall configuration of the display device of the present example. FIG. 6A is a diagram illustrating a vertical section of the display device, and FIG. 6B is a perspective view of the display device cut in the vertical direction.

A circuit board 112 on which the light sources 110 are mounted is arranged on the bottom surface side of the display device 100, the diffusion plate 120 and the polarizing plate 130, which are octagonal structures, are arranged over the circuit board 112, the polarizing plate 150 is arranged over the circuit board 112, with the support member 140 being interposed therebetween, and the flat polarizing plate 160 is arranged over the polarizing member 150. The retroreflecting plate 170 is arranged on the polarizing plate 160, and the ring-shaped through-hole 172 is formed in the retroreflecting plate 170 as a design for generating an original image. The polarizing beam splitter 180 is arranged so as to face the retroreflecting plate 170. A pair of inclined retroreflecting plates 174 and a pair of retroreflecting plates 176 extending vertically from the retroreflecting plates 174 are further attached to the edges in the longitudinal direction of the retroreflecting plate 170, and a pair of acrylic plates 190 extending vertically are attached to the edges in the lateral direction of the retroreflecting plate 170. The outer peripheral portion of the polarizing beam splitter 180 is attached to the edge portions of the pair of retroreflecting plates 176 and the pair of acrylic plates 190.

When the light sources 110 are driven, the back surface side of the retroreflecting plate 170 is irradiated with polarized light, and the light passing through the through-hole 172 of the retroreflecting plate 170 displays an aerial image Q corresponding to the design of the original image over the polarizing beam splitter 180. By using the set of polarizing plates 130 and 150 having different inclination angles, the polarization efficiency is improved, the original image inside becomes difficult to see through the polarizing beam splitter 180, and the visibility of the aerial image Q is improved.

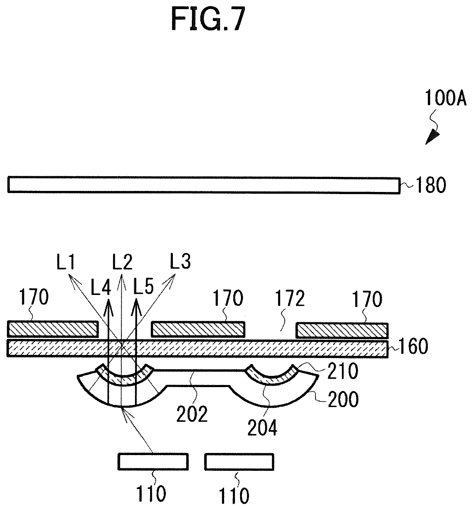

Next, a second example of the present invention will be described in detail. FIG. 7 is a schematic cross-sectional view illustrating the structure of the display device according to the second example, and the same components as those of the first example illustrated in FIG. 3A are denoted by the same reference numerals. In the first example, the set of polarizing plates 130 and 150 inclined at different angles are arranged between the light source 110 and the polarizing plate 160, but in the second example, a curved diffusion plate 200 and a curved polarizing plate 210 are arranged between the light sources 110 and the polarizing plate 160.

The display device 100A of the second example includes the light sources 110, the diffusion plate 200, the polarizing plate 210, the polarizing plate 160, the retroreflecting plate 170, and the polarizing beam splitter 180. The diffusion plate 200 is arranged over the light sources 110, and includes a flat region 202 substantially orthogonal to the optical axis of the light sources 110, and a doughnut-shaped or annular recessed region 204 formed around the flat region 202. The surface of the recessed region 204 has an arc-shaped or curved surface. In a preferred aspect, the recessed region 204 is aligned with the position of the through-hole 172 of the retroreflecting plate 170, for example, the diffusion plate 200 is arranged such that the center of the through-hole 172 substantially coincides with the center of the recessed region 204.

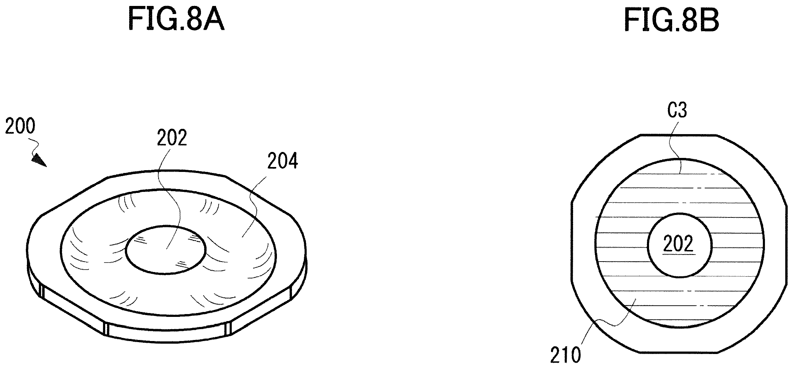

FIGS. 8A and 8B illustrate a specific example of the diffusion plate 200. FIG. 8A is a perspective view of the diffusion plate, and FIG. 8B is a plan view of the diffusion plate. The diffusion plate 200 has a substantially octagonal outer shape, and in the center portion of the diffusion plate 120, the flat region 202 having a circle shape and the annular recessed region 204 connected to the flat region 202 are formed. The shape of the flat region 202 is not particularly limited to a circular shape, and may be, for example, a rectangular shape or a polygonal shape.

The polarizing plate 210 is arranged on the diffusion plate 200. Although the shape and size of the polarizing plate 210 are not particularly limited, the polarizing plate 210 is, for example, a polarizing film and is attached so as to follow the curved surface of the recessed region 204 of the diffusion plate 200. FIG. 8B illustrates an example in which a polarizing film is attached to the recessed region 204, and the dash-dotted line C3 in the drawing indicates a transmission axis of the polarizing plate 210, namely a direction of polarization.

Unpolarized radial light from the light sources 110, such as LEDs, is incident on the diffusion plate 200, and the light incident on the diffusion plate 200 is diffused in various directions by the diffusion plate 200. In this case, the light L1, L2, and L3 incident on the polarizing plate 210 from the diffusion plate 200 at a substantially right angle is relatively effectively polarized, but the light L4 and L5 incident on the polarizing plate 210 from an oblique direction is not sufficiently polarized or not effectively polarized by the polarizing plate 210. The light L4 and L5 which has passed through the polarizing plate 210 is then incident on the polarizing plate 160, and even if the light is not polarized by the polarizing plate 210, the light which is incident from a direction substantially perpendicular to the polarizing plate 160 is polarized by the polarizing plate 160.

The semicircular polarizing plate 210 effectively polarizes most of the light diffused by the diffusion plate 200 by making the light incident from a substantially perpendicular direction, but the light not polarized by the polarizing plate 210 can be polarized by the polarizing plate 160.

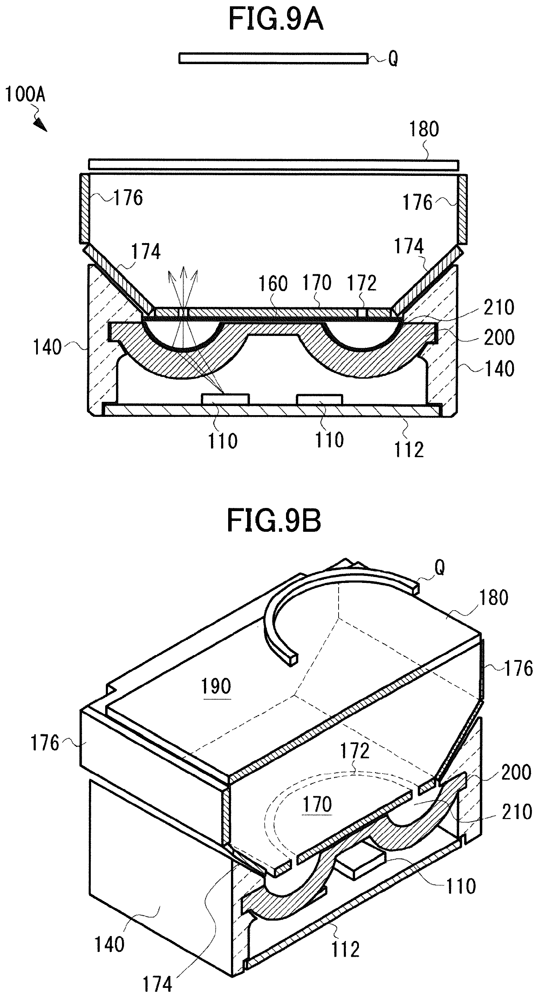

FIGS. 9A and 9B are views illustrating the overall configuration of the display device of the second example. FIG. 9A is a diagram illustrating a vertical cross-section of the display device, and FIG. 9B is a perspective view of the display device cut in the vertical direction, and the same components as those of the first example illustrated in FIG. 6 are denoted by the same reference numerals.

The circuit board 112 on which the light sources 110 are mounted is arranged on the bottom surface side of the display device 100A, the diffusion plate 200 including the recessed region 204 and the curved polarizing plate 210 are arranged over the circuit board 112, the flat polarizing plate 160 is arranged over the diffusion plate 200 and the polarizing plate 210, and the retroreflecting plate 170 is arranged over the polarizing plate 160. The ring-shaped through-hole 172 is formed in the retroreflecting plate 170 as a design for generating an original image. The polarizing beam splitter 180 is arranged so as to face the retroreflecting plate 170.

When the light sources 110 are driven, the back surface side of the retroreflecting plate 170 is irradiated with polarized light, and the light passing through the through-hole 172 of the retroreflecting plate 170 displays an aerial image Q corresponding to the design of the original image over the polarizing beam splitter 180. By using the curved, semicircle-shaped polarizing plate 210, the polarization efficiency is improved, the original image inside becomes difficult to see through the polarizing beam splitter 180, and the visibility of the aerial image Q is improved.

Although the examples of the present invention have been described in detail, the present invention is not limited to a specific example, and various modifications or changes can be made within the scope of the present invention described in the claims.

## Claims

1. A display device (10, 100, 100A) capable of displaying an aerial image by using retroreflection, the display device (10, 100, 100A) comprising: a light source (20, 110); a diffusion plate (30, 120, 200) arranged over the light source (20, 110); a first polarizing plate (40, 130, 150, 160, 210) arranged over the diffusion plate (30, 120, 200); a second polarizing plate (40, 130, 150, 160, 210) arranged over the first polarizing plate (40, 130, 150, 160, 210); a retroreflecting member arranged on the second polarizing plate (40, 130, 150, 160, 210) and having a design for generating an original image by irradiation of the light source (20, 110); and a polarizing beam splitter (50, 180) arranged to face the retroreflecting member, **characterized by** said retroreflecting member being arranged on the second polarizing plate (40, 130, 150, 160, 210) and in that the first polarizing plate (40, 130, 150, 160, 210) includes a region inclined with respect to a main surface of the second polarizing plate (40, 130, 150, 160, 210).

2. The display device according to claim 1, wherein
the first polarizing plate includes a first inclined region inclined downward with respect to the main surface of the second polarizing plate and a second inclined region opposite to the first inclined region and inclined upward.

3. The display device according to claim 2, wherein
an inclination angle of the first inclined region with respect to the main surface of the second polarizing plate and an inclination angle of the second inclined region with respect to the main surface of the second polarizing plate are the same.

4. The display device according to one of claims 1 to 3, wherein
directions of a transmission axis of the first polarizing plate and a transmission axis of the second polarizing plate are aligned with a direction of a reflection axis of the polarizing beam splitter.

5. A display device (10, 100, 100A) capable of displaying an aerial image by using retroreflection, the display device (10, 100, 100A) comprising:a light source (20, 110);a diffusion plate (30, 120, 200) arranged over the light source (20, 110);a first polarizing plate (40, 130, 150, 160, 210) arranged on the diffusion plate (30, 120, 200);a second polarizing plate (40, 130, 150, 160, 210) arranged over the first polarizing plate (40, 130, 150, 160, 210);a retroreflecting member arranged on the second polarizing plate (40, 130, 150, 160, 210) and having a design for generating an original image by irradiation of the light source (20, 110); anda polarizing beam splitter (50, 180) arranged to face the retroreflecting member, **characterized by** said retroreflecting member being arranged on the second polarizing plate (40, 130, 150, 160, 210) and in that the first polarizing plate (40, 130, 150, 160, 210) has a curved shape.

6. The display device according to claim 5, wherein
the curved shape of the first polarizing plate conforms to the design of the retroreflecting member.

7. The display device according to claim 5 or 6, wherein
directions of a transmission axis of the first polarizing plate and a transmission axis of the second polarizing plate are aligned with a direction of a reflection axis of the polarizing beam splitter.

## Patentansprüche

1. Anzeigevorrichtung (10, 100, 100A), die ein Luftbild mittels Retroreflexion anzeigen kann, wobei die Anzeigevorrichtung (10, 100, 100A) Folgendes aufweist: eine Lichtquelle (20, 110); eine Diffusionsplatte (30, 120, 200), die über der Lichtquelle (20, 110) angeordnet ist; eine erste Polarisationsplatte (40, 130, 150, 160, 210), die über der Diffusionsplatte (30, 120, 200) angeordnet ist; eine zweite Polarisationsplatte (40, 130, 150, 160, 210), die über der ersten Polarisationsplatte (40, 130, 150, 160, 210) angeordnet ist; ein retroreflektierendes Element, das auf der zweiten Polarisationsplatte (40, 130, 150, 160, 210) angeordnet ist und derart ausgebildet ist, dass es durch Bestrahlung von der Lichtquelle (20, 110) ein Originalbild erzeugen kann; und einen polarisierender Strahlteiler (50, 180), der dem retroreflektierenden Element zugewandt gegenüberliegend angeordnet ist,
**dadurch gekennzeichnet, dass** das retroreflektierende Element auf der zweiten Polarisationsplatte (40, 130, 150, 160, 210) angeordnet ist und dass die erste Polarisationsplatte (40, 130, 150, 160, 210) einen Bereich aufweist, der in Bezug auf eine Hauptfläche der zweiten Polarisationsplatte (40, 130, 150, 160, 210) geneigt ist.

2. Anzeigevorrichtung nach Anspruch 1,
wobei die erste Polarisationsplatte einen ersten geneigten Bereich aufweist, der in Bezug auf die Hauptfläche der zweiten Polarisationsplatte nach unten geneigt ist, und einen zweiten geneigten Bereich aufweist, der dem ersten geneigten Bereich gegenüberliegt und nach oben geneigt ist.

3. Anzeigevorrichtung nach Anspruch 2,
wobei ein Neigungswinkel des ersten geneigten Bereichs in Bezug auf die Hauptfläche der zweiten Polarisationsplatte und ein Neigungswinkel des zweiten geneigten Bereichs in Bezug auf die Hauptfläche der zweiten Polarisationsplatte gleich sind.

4. Anzeigevorrichtung nach einem der Ansprüche 1 bis 3,
wobei Richtungen einer Transmissionsachse der ersten Polarisationsplatte und einer Transmissionsachse der zweiten Polarisationsplatte mit einer Richtung einer Reflexionsachse des polarisierenden Strahlteilers ausgerichtet sind.

5. Anzeigevorrichtung (10, 100, 100A), die ein Luftbild mittels Retroreflexion anzeigen kann, wobei die Anzeigevorrichtung (10, 100, 100A) Folgendes aufweist: eine Lichtquelle (20, 110); eine Diffusionsplatte (30, 120, 200), die über der Lichtquelle (20, 110) angeordnet ist; eine erste Polarisationsplatte (40, 130, 150, 160, 210), die auf der Diffusionsplatte (30, 120, 200) angeordnet ist; eine zweite Polarisationsplatte (40, 130, 150, 160, 210), die über der ersten Polarisationsplatte (40, 130, 150, 160, 210) angeordnet ist; ein retroreflektierendes Element, das auf der zweiten Polarisationsplatte (40, 130, 150, 160, 210) angeordnet ist und derart ausgebildet ist, dass es durch Bestrahlung von der Lichtquelle (20, 110) ein Originalbild erzeugen kann; und einen polarisierender Strahlteiler (50, 180), der dem retroreflektierenden Element zugewandt gegenüberliegend angeordnet ist,
**dadurch gekennzeichnet, dass** das retroreflektierende Element auf der zweiten Polarisationsplatte (40, 130, 150, 160, 210) angeordnet ist und dass die erste Polarisationsplatte (40, 130, 150, 160, 210) ein gekrümmte Form aufweist.

6. Anzeigevorrichtung nach Anspruch 5,
wobei die gekrümmte Form der ersten Polarisationsplatte der Gestaltung des retroreflektierenden Elements entspricht.

7. Anzeigevorrichtung nach Anspruch 5 oder 6,
wobei Richtungen einer Transmissionsachse der ersten Polarisationsplatte und einer Transmissionsachse der zweiten Polarisationsplatte mit einer Richtung einer Reflexionsachse des polarisierenden Strahlteilers ausgerichtet sind.

## Revendications

1. Dispositif d'affichage (10, 100, 100A) apte à afficher une image aérienne en utilisant la rétro réflexion, le dispositif d'affichage (10, 100, 100A) comprenant : une source de lumière (20, 110) ; une plaque de diffusion (30, 120, 200) agencée au-dessus de la source de lumière (20, 110) ; une première plaque polarisante (40, 130, 150, 160, 210) agencée au-dessus de la plaque de diffusion (30, 120, 200) ; une seconde plaque polarisante (40, 130, 150, 160, 210) agencée au-dessus de la première plaque polarisante (40, 130, 150, 160, 210) ; un élément rétro réfléchissant agencé sur la seconde plaque polarisante (40, 130, 150, 160, 210) et présentant un motif destiné à générer une image originale par irradiation de la source de lumière (20, 110) ; et un séparateur de faisceau polarisant (50, 180) agencé de manière à faire face à l'élément rétro réfléchissant, **caractérisé en ce que** ledit élément rétro réfléchissant est agencé sur la seconde plaque polarisante (40, 130, 150, 160, 210) et **en ce que** la première plaque polarisante (40, 130, 150, 160, 210) comprend une région inclinée par rapport à une surface principale de la seconde plaque polarisante (40, 130, 150, 160, 210).

2. Dispositif d'affichage selon la revendication 1, dans lequel
la première plaque polarisante comprend une première région inclinée, inclinée vers le bas par rapport à la surface principale de la seconde plaque polarisante, et une seconde région inclinée, opposée à la première région inclinée et inclinée vers le haut.

3. Dispositif d'affichage selon la revendication 2, dans lequel
un angle d'inclinaison de la première région inclinée par rapport à la surface principale de la seconde plaque polarisante et un angle d'inclinaison de la seconde région inclinée par rapport à la surface principale de la seconde plaque polarisante sont identiques.

4. Dispositif d'affichage selon l'une quelconque des revendications 1 à 3, dans lequel
les directions d'un axe de transmission de la première plaque polarisante et d'un axe de transmission de la seconde plaque polarisante sont alignées avec une direction d'un axe de réflexion du séparateur de faisceau polarisant.

5. Dispositif d'affichage (10, 100, 100A) apte à afficher une image aérienne en utilisant la rétro réflexion, le dispositif d'affichage (10, 100, 100A) comprenant : une source de lumière (20, 110) ; une plaque de diffusion (30, 120, 200) agencée au-dessus de la source de lumière (20, 110) ; une première plaque polarisante (40, 130, 150, 160, 210) agencée sur la plaque de diffusion (30, 120, 200) ; une seconde plaque polarisante (40, 130, 150, 160, 210) agencée au-dessus de la première plaque polarisante (40, 130, 150, 160, 210) ; un élément rétro réfléchissant agencé sur la seconde plaque polarisante (40, 130, 150, 160, 210) et présentant un motif destiné à générer une image originale par irradiation de la source de lumière (20, 110) ; et un séparateur de faisceau polarisant (50, 180) agencé de manière à faire face à l'élément rétro réfléchissant, **caractérisé en ce que** ledit élément rétro réfléchissant est agencé sur la seconde plaque polarisante (40, 130, 150, 160, 210) et **en ce que** la première plaque polarisante (40, 130, 150, 160, 210) présente une forme courbe.

6. Dispositif d'affichage selon la revendication 5, dans lequel
la forme courbe de la première plaque polarisante est conforme à la conception de l'élément rétro réfléchissant.

7. Dispositif d'affichage selon la revendication 5 ou 6, dans lequel
les directions d'un axe de transmission de la première plaque polarisante et d'un axe de transmission de la seconde plaque polarisante sont alignées avec une direction d'un axe de réflexion du séparateur de faisceau polarisant.
